(19) Europäisches Patentamt | European Patent Office | Office européen des brevets

(11) **EP 4 265 034 B1**

(12) **EUROPEAN PATENT SPECIFICATION**

(45) Date of publication and mention
of the grant of the patent:
**10.04.2024  Bulletin 2024/15**

(21) Application number: **20827964.6**

(22) Date of filing: **21.12.2020**

(51) International Patent Classification (IPC):
**H04W 72/121** *(2023.01)*        **G06N 5/01** *(2023.01)*
**G06N 10/60** *(2022.01)*

(52) Cooperative Patent Classification (CPC):
**H04W 72/121; G06N 5/01; G06N 10/60**

(86) International application number:
**PCT/EP2020/087517**

(87) International publication number:
**WO 2022/135675 (30.06.2022 Gazette 2022/26)**

(54) **DETERMINING ALLOCATION OF RESOURCES IN A WIRELESS NETWORK**

BESTIMMUNG DER ZUWEISUNG VON RESSOURCEN IN EINEM DRAHTLOSEN NETZWERK

DÉTERMINATION D'ATTRIBUTION DE RESSOURCES DANS UN RÉSEAU SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.10.2023  Bulletin 2023/43**

(73) Proprietor: **Telefonaktiebolaget LM Ericsson
(publ)
164 83 Stockholm (SE)**

(72) Inventors:
• **SARAVANAN, M
Velachery, Chennai 600042 (IN)**
• **AWAN, Ahsan Javed
186 96 Vallentuna (SE)**
• **BHARATHVAJ, K M
Perungudi, Chennai 600096 (IN)**

(74) Representative: **Ericsson
Patent Development
Torshamnsgatan 21-23
164 80 Stockholm (SE)**

(56) References cited:
• **NAGHSH ZAHRA ET AL: "Digitally Annealed
Solution for the Maximum Clique Problem with
Critical Application in Cellular V2X", ICC 2019 -
2019 IEEE INTERNATIONAL CONFERENCE ON
COMMUNICATIONS (ICC), IEEE, 20 May 2019
(2019-05-20), pages 1-7, XP033582128, DOI:
10.1109/ICC.2019.8761634 [retrieved on
2019-07-12]**
• **Tony T. Tran ET AL: "A Hybrid Quantum-Classical
Approach to Solving Scheduling Problems",
Proceedings of the Ninth International
Symposium on Combinatorial Search (SoCS
2016), 20 June 2016 (2016-06-20), pages 98-106,
XP055509982, Retrieved from the Internet:
URL:https://www.aaai.org/ocs/index.php/SOC
S/SOCS16/paper/viewFile/13958/13239**

**Description**

Technical Field

Examples of the present disclosure relate to determining allocation of resources in a wireless network, for example using a method that uses a quantum computing device.

Background

In some wireless communication systems and wireless networks, wireless resources may be allocated to one or more wireless communication devices in the network. The main goal of resource allocation is to optimally assign the limited radio resource blocks (RBs) to the wireless communication devices within the coverage region of the wireless network. Allocation of the resources may be determined based on the channel quality experienced by the wireless communication devices such that it satisfies all given constraints and also maximizes the sum of user perceived valuations as a whole.

Attempts to solve this resource allocation problem have included conversion of the problem to a combinatorial optimization problem and then solving it using classical methods. As it is an NP-hard problem in terms of computational complexity, only approximate classical algorithms exist that are also computationally expensive. Furthermore, in some wireless networks, resource blocks have to be reassigned at the beginning of each Transmission Time Interval (TTI), which is usually in milliseconds, and so there is a need to perform this optimal allocation repeatedly in a rapid manner.

NAGHSH ZAHRA ET AL: "Digitally Annealed Solution for the Maximum Clique Problem with Critical Application in Cellular V2X", ICC 2019 - 2019 IEEE INTERNATIONAL CONFERENCE ON COMMUNICATIONS (ICC), IEEE, 20 May 2019, discloses that cellular V2X, the "Vehicle to Everything" standard, defines a framework for practically feasible information exchange among vehicles and other network entities. Long Term Evolution, LTE, V2X uses a portion of uplink frame as a resource pool and in the main mode, relies on a central scheduler for allocating these resources to the users. As an important resource management problem, besides the optimal resource scheduling, finding a proper lower bound for required resources in this mode is NP-hard. Network management entities and service providers require this lower bound to determine the minimum size of the uplink frame slice to be allocated to the V2X resource pool. Advantage of Digital Annealer potentials is taken to target this problem at a new size range. The Digital Annealer enables finding the minimum required size of the V2X slice in the uplink frame with high speed through maximum clique and minimum cover graph theoretic formulations of this problem.

Tony T. Tran ET AL: "A Hybrid Quantum-Classical Approach to Solving Scheduling Problems", Proceedings of the Ninth International Symposium on Combinatorial Search (SoCS 2016), 20 June 2016, discloses that an approach to solving complex problems is to decompose them and integrate dedicated solvers for those subproblems. A hybrid decomposition is introduced that incorporates: (1) a quantum annealer that samples from the configuration space of a relaxed problem to obtain strong candidate solutions, and (2) a classical processor that maintains a global search tree and enforces constraints on the relaxed components of the problem. The framework is the first to use quantum annealing as part of a complete search. Variants of the approach is considered with differing amounts of guidance from the quantum annealer. The algorithm is empirically tested and the variants on problems from three scheduling domains are compared: graph-coloring-type scheduling, simplified Mars Lander task scheduling, and airport runway scheduling. While only problems of small size were tested, due to the limitation of available quantum annealing hardware at that time, the empirical results show that information obtained from the quantum annealer can be used for more effective search node pruning and to improve node selection heuristics when compared to a standard classical approach.

Summary

Prior resource allocation problems such as those described above are NP-hard problems that may require considerable computing resources to find an optimal solution. Therefore, a way of speeding up the solution of a resource allocation problem is desired. For example, embodiments of this disclosure may employ quantum computing to more quickly obtain a solution to the resource allocation problem.

According to a first aspect of the present disclosure, a method of determining allocation of resources in a wireless network is provided, according to claim 1.

According to a second aspect of the present disclosure, an apparatus for determining allocation of resources in a wireless network is provided, according to claim 14.

According to a seventh aspect of the present disclosure, a computer program is provided, according to claim 13.

Further embodiments are provided in the dependent claims.

Advantages to embodiments of this disclosure may include a considerable increase in the speed of finding a solution, such as an optimal solution, to the resource allocation problem. In addition, conversion of the problem to a QUBO problem can in some examples be easily generalized to add more constraints. Examples of this disclosure can be applied to Social Internet of Things (SIOT) technologies to optimize any IOT networks relate to computationally intensive problems. Examples of this disclosure may use OFDMA inputs for model formulation, though this can be extended to MIMO inputs in other examples.

Brief Description of the Figures

For a better understanding of examples of the present disclosure, and to show more clearly how the examples may be carried into effect, reference will now be made, by way of example only, to the following Figures in which:

Figure 1A is a flow chart of a non-claimed example of a method of determining allocation of resources in a wireless network;

Figure 1B is a flow chart of a claimed embodiment of a method of determining allocation of resources in a wireless network;

Figure 2 shows a graph of a non-claimed example of the execution time to complete one anneal in a simulation of an annealing process;

Figure 3 shows a graph of a non-claimed example of the execution time to complete one anneal in another simulation of an annealing process;

Figure 4 shows a graph of a non-claimed example of the execution time to complete one anneal in a quantum execution of an annealing process;

Figures 5A and 5B show graphs of a non-claimed of the execution time to complete one anneal in a further simulation of an annealing process; and

Figure 6 is a schematic of an example of an apparatus for determining allocation of resources in a wireless network.

Detailed Description

The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

Example embodiments of this disclosure may provide an approach for solving the above-described resource allocation problem by converting the problem to or expressing the problem as a Quadratic Unconstrained Binary Optimization (QUBO) problem. This QUBO problem may then for example be solved using a quantum annealer, which works based on quantum mechanical phenomena such as superposition, entanglement and quantum tunneling.

In a cellular network, such as a Fourth Generation (4G) / Long-Term Evolution (LTE), Fifth Generation(5G) / New Radio (NR) or other type of cellular network, communication may occur in a cell where a central Base Station (BS) communicates with one or more active wireless devices, also referred to as Mobile Stations (MSs), after the process of allocation of radio resource units. The radio spectrum is a finite resource, which means there is a need for an optimal and effective allocation of radio resources in the time-frequency domain. In the frequency domain, the available bandwidth for the cell is divided into smaller chunks comprised of multiple subcarriers, whereas in the time domain a frame-based division is defined which is composed of many sub-frames with each time length equivalent to one TTI. The minimum resource allocation unit that can be assigned is called a Scheduling Unit (SU) and the base station schedules units of time-frequency resources (e.g. one or more subcarriers and one or more subframes) among the active devices within the cell once per TTI, usually at the beginning of the interval.

In an example downlink transmission, the following two assumptions are made: (i) The base station always has data to transmit to one or more wireless communication devices (also referred to herein as User Equipments, UEs); and (ii) Data that is to be sent to the wireless communication device(s) are organized in packets before being sent. Each wireless communication device experiences different signal-to-noise ratio (SNR) on each resource unit, where the signal-to-noise ratio is defined as the ratio of signal power to noise power. Therefore, in some examples, fine granularity for allocation of resources may be based on channel quality experienced by the wireless communication devices, which may be represented for example using Channel Quality Indicator (CQI), indicating the quality of the communication channel between the device and the base station. A CQI value obtained for a wireless communication device may in some examples be mapped to a Modulation and Coding Scheme (MCS) index which defines a code rate and a modulation scheme for communication between the base station and the device. The MCS defines how many useful bits can be transmitted per resource element, and depends on the channel quality. If the link has better quality, then the MCS index will be higher and so more useful data can be transmitted (e.g. the data can be transmitted at a higher rate as compared to a lower MCS index).

Wireless network technologies such as LTE and 5G use high-performance radio spectrum access method called Orthogonal Frequency-Division Multiple Access (OFDMA) for the downlink, which is capable of providing higher spectral efficiency by taking full advantage of the frequency and time diversity of the radio channel. Another method called Multiple-Input and Multiple-Output (MIMO) is also employed by these wireless networks for data rate enhancement by increasing the capacity of a radio link using multiple transmission and receiving antennas to exploit multipath propagation. However, these schemes may not be sufficient to satisfy the requirements of the wireless communication devices. For example, the way in which resources are allocated may influence the performance and quality of a wireless network significantly.

The discovery of quantum computers has revolutionized the way in which certain problems may be solved, in particular those problems that belong to the class of NP-hard. In particular, a metaheuristic procedure called quantum annealing has been found to be very effective in solving combinatorial optimization problems, where the goal is to find a particular combination of arguments or variables among many possible combinations that results in a global extremum of a function. If an optimization problem such as the optimal way to allocate resources in a wireless network can be framed as an energy minimization problem, then the quantum annealing process can be used for example to find the low-energy states of the problem and hence the optimal or near-optimal combination of variables by exploiting the effects of quantum physics. Example embodiments of this disclosure use this approach.

For a quantum system, a Hamiltonian is a function which maps certain states, called eigenstates, to the corresponding eigen energies, and the collection of these make up the eigen spectrum. This Hamiltonian can be viewed as the sum of two terms: (i) initial Hamiltonian whose lowest-energy state is when all the qubits are in a superposition state of 0 and 1; and (ii) final Hamiltonian or problem Hamiltonian whose lowest-energy state is the solution to the problem that we are trying to solve. In quantum annealing, we begin in the lowest-energy eigenstate of the initial Hamiltonian. In the annealing process, we gradually increase the influence of the problem Hamiltonian, which contains the qubit biases and coupling strengths between qubits, and we gradually decrease the influence of the initial Hamiltonian and at the end of it, we will be in the eigenstate of the problem Hamiltonian. Ideally, we have stayed in the minimum energy state throughout the quantum annealing process so that, by the end of the process, we are in the minimum energy state of the problem Hamiltonian and therefore have a solution to the problem we want to solve. In some examples, by the end of the quantum annealing process, each qubit is a classical object.

In examples of this disclosure, the resource allocation problem for allocating resources in a wireless network is presented as a combinatorial optimization problem, and then transformed to a quadratic unconstrained binary optimization (QUBO) problem that can be naturally embedded on and solved directly by a quantum computing device such as a quantum annealing device. A QUBO problem is defined for example using an upper triangular matrix $\mathbf{Q}$ of size $N \times N$ with $N$ being the number of logical qubits and a binary vector $x = (x_1, x_2, \dots , x_N)^T$, as minimizing the following energy function E:

$$E(\mathbf{Q}, \mathbf{x}) = \sum_i Q_{i,i}\, x_i + \sum_{i<j} Q_{i,j}\, x_i x_j \qquad (1)$$

where $x_i \in \{0,1\}$ and $Q_{ij} \in \mathbb{R}$, $i, j$ = 1,2,..., $N$. Each output decision variable $x_i$ represents the measured value (classical) of a logical qubit. The main diagonal elements $Q_{ii}$ of the matrix $\mathbf{Q}$ are the linear coefficients in the function $E$ which represents the qubit biases, and the off-diagonal elements $Q_{ij}$ of the matrix $\mathbf{Q}$ are the quadratic coefficients in the function *E* which represents the coupling strengths between neighboring qubits. Note that, $x_i^2 = x_i$ as $x_i \in \{0,1\}$.

This can be expressed more concisely in some examples as:

$$\min_{\mathbf{x} \in \{0,1\}^N} \mathbf{x}^T \mathbf{Q} \mathbf{x} \qquad (2)$$

Mapping an optimization problem into the QUBO format in some examples may involve calculating the appropriate values of all the elements of the matrix **Q** such that a solution vector x that minimizes *E* will represent an optimal solution to the original non-QUBO optimization problem formulation, e.g. the problem of optimal or near-optimal allocation of resources in a wireless network.

Prior resource allocation problems such as those described above are NP-hard problems that may require considerable computing resources to find an optimal solution. Therefore, a way of speeding up the solution of a resource allocation problem is desired. For example, embodiments of this disclosure may employ quantum computing to more quickly obtain a solution to the resource allocation problem. Advantages to embodiments of this disclosure may include a considerable increase in the speed of finding a solution, such as an optimal solution, to the resource allocation problem. In addition, conversion of the problem to a QUBO problem can in some examples be easily generalized to add more constraints. Examples of this disclosure can be applied to Social Internet of Things (SIOT) technologies to optimize any IOT networks relate to computationally intensive problems. Examples of this disclosure may use OFDMA inputs for model formulation, though this can be extended to MIMO inputs in other examples.

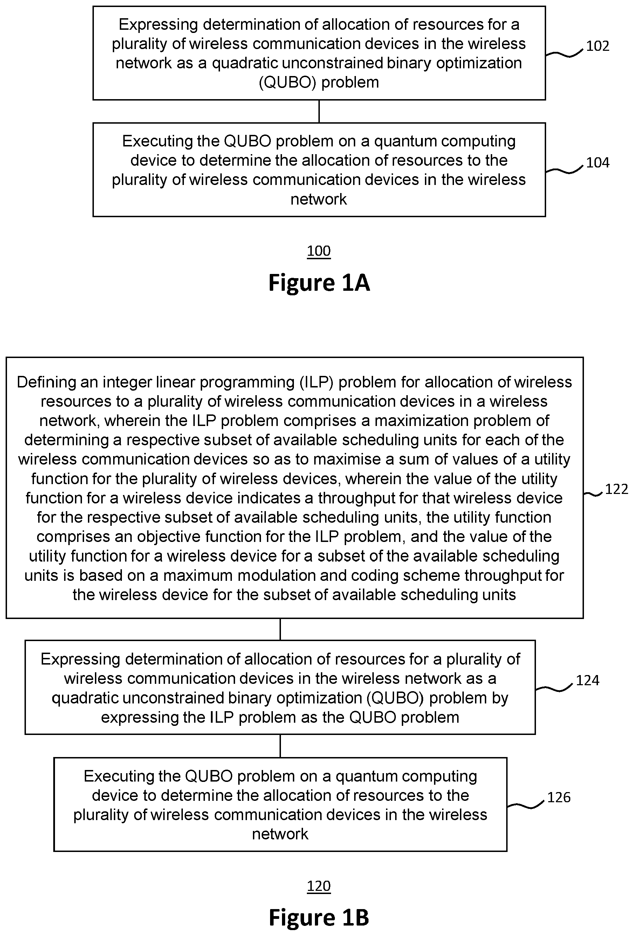

Figure 1 is a flow chart of an example of a method 100 of determining allocation of resources in a wireless network. The method comprises, in step 102, expressing determination of allocation of resources for a plurality of wireless communication devices in the wireless network as a quadratic unconstrained binary optimization (QUBO) problem. Step 104 of the method 100 comprises executing the QUBO problem on a quantum computing device to determine the allocation of resources to the plurality of wireless communication devices in the wireless network. This may comprise for example performing a quantum annealing process.

The Quantum computing device may be for example a quantum annealer such as from D-Wave Systems Inc. An example of such a device is the D-Wave 2000Q, which may in some examples execute the QUBO problem. In other examples, the quantum computing device may be another type of quantum computing device. The quantum computing device may execute the QUBO problem in any suitable location, including for example local to the entity performing the method 100, at the same premises as the entity performing the method 100, or remote from the entity performing the method 100. In some examples, executing the QUBO problem on a quantum computing device may comprise sending instructions to the quantum computing device, which may be local or remote, to execute the QUBO problem.

A particular example of this method is now described. At the beginning of each transmission time interval (TTI), the resource allocation problem of how to allocate resources in a wireless network may be determined. This may comprise for example how to share available radio resources among active devices in order to maximize (or nearly maximize) a given objective function that quantifies a user perceived valuation of the quality of signal received at the mobile terminal. Furthermore, the allocation may be done in some examples such that it satisfies all given constraints, which depend on the technologies or methods that are used. It may be desirable to allocate all available resource units (e.g. in one TTI) one by one to the UEs with the best channel quality. However, this may conflict with the current 3GPP standards.

If we consider the Long-Term Evolution (LTE) networks, the 3GPP standard does not support multiple data rates (e.g. different MCSs) for each UE within one TTI in order to avoid excessive signaling overheads. In order to comply with the existing standards, the resource allocation algorithm should select, for each UE, a common MCS over all the resource units assigned to that UE in one TTI whenever a resource allocation decision is made. However, it may be possible for different UEs to use different MCSs.

In each transmission time interval, data to be transmitted are encapsulated in a transport block (TB) and the size of the TB in bits received by the UE is referred to as the Transport Block Size (TBS). This transport block size can be calculated in some examples using a function *TBS(n,m),* which returns the amount of data that can be sent from the BS to a UE by allocating *n* scheduling units to it and by assigning the MCS *m,* and determines the maximum amount of data that can be transmitted during a TTI to a particular UE using that number of scheduling units (also referred to herein as resource units). A scheduling unit (SU) is comprised of two consecutive resource blocks (RBs). In some examples, allocation of resources in a wireless network may comprise allocation of resource blocks or scheduling units to one or more wireless communication devices, for example in a certain time period such as one TTI. In other examples, allocation of resources may comprise allocation of time slots of other lengths to one or more wireless communication devices.

Consequently, the instantaneous data rate is denoted by:

$$R(n,m) = \frac{TBS(n,m)}{TTI},$$

where *TTI* refers to the length of the transmission time interval.

A basic constraint in examples of the resource allocation problem described herein is that each resource unit should be allocated to at most one UE. This constraint also ensures that not more than *N* scheduling units can be allocated where *N* is the total number of scheduling units available. There are also the following two constraints for OFDMA in LTE: a bit error rate (BER) constraint and a single MCS per device constraint.

The number of bit errors that occur in a unit time during the transmission determines the bit error rate. Depending on the radio channel quality of each user equipment, LTE dynamically adapts the MCS (e.g. between TTIs for one or more wireless communication devices) by selecting a spectrally efficient MCS for a mobile terminal, if that UE has a good SNR value on a given scheduling unit. Although it results in a higher instantaneous rate on that scheduling unit, it may also increase the bit error rate. A selected MCS should not cause the BER to cross a given threshold even though it is more spectrally efficient. The most efficient MCS that can be used by a UE *u* on scheduling unit *k* without breaking this BER constraint is referred to as as $m_{u,k}$.

According to the current 3GPP standards for LTE, a BS can only transmit to a particular UE using a single MCS over all the resources assigned to the UE within one TTI. In other words, the MCS cannot be adapted to each scheduling unit within one TTI, which may otherwise maximize the capacity as expected in theoretic OFDMA-based systems. Consequently, the instantaneous data rate per resource unit has to be the same across all resource units allocated to a particular UE in one TTI. For simplicity, we can assume that each UE is constrained to use the MCS corresponding to its allocated scheduling unit(s) of the lowest quality (spectral efficiency) to meet an acceptable BER per scheduling unit, and this single MCS $m_u$ assigned to a UE *u* can be referred to as:

$$m_u = min(m_{u,k} | u \in \mathcal{U}, k \in \mathcal{N}_u)$$

where $\mathcal{U}$ denotes the set of UEs and $\mathcal{N}_u$ denotes the set of scheduling units allocated to the UE *u*.

In some examples of this disclosure, to quantify the objective function, which is the problem of how to allocate (or how to determine allocation of) resources in a wireless network, we define a utility function $\varphi_u$ that measures the benefit of a solution, such as for example the UE perceived benefit. For that, we use two quantities: (i) Total number of scheduling units *N* and we denote the set containing these scheduling units as $\mathcal{N} = \{k_1, k_2, k_3, \ldots, k_N\}$ where a scheduling unit is represented using $k_j, j \in [1, N]$; and (ii) Total number of UEs *U* and we denote the set of UEs as $\mathcal{U} = \{u_1, u_2, u_3, \ldots, u_U\}$ where each UE is represented using $u_i, i \in [1, U]$. Further, for example in LTE, we denote the set containing MCSs as $\mathcal{M}$ = {$m_1$, $m_2$, $m_3$, ..., $m_M$} where *M* represents the total number of MCSs.

As there are *N* scheduling units available, a UE can be allocated with any one of the $2^N$ possible combinations where $2^N$ is the number of subsets possible for a set with cardinality *N*. Further, for example according to the LTE standard, each UE can use only one MCS among *M* available MCSs over all of the allocated resources and hence each UE can be assigned with any one of the *M* possible MCSs. With this, we define the utility function $\varphi_u$ as a function which maps the input from its domain $2^N \times M$ to a utility value in its co-domain $\mathbb{R}^+$. Further, the utility function $\varphi$ is a monotonically increasing function on both of its arguments. For simplicity, in this example, we consider the utility function as $\varphi_u(\mathcal{N}_u, m_u) = |\mathcal{N}_u| \times index(m_u)$ where $\mathcal{N}_u$ is the set of scheduling units allocated to the UE *u* and $index(m_u)$ is the maximum MCS index that can be used by UE *u* on $\mathcal{N}_u$. However, this can be extended to a large class of utility functions.

The objective is to maximize the sum of utility values of all the UEs by distributing the finite number of resources to the finite number of UEs. In other words, the aim is to find the disjoint allocated resource sets $\mathcal{N}_{u_1}, \mathcal{N}_{u_2}, \ldots, \mathcal{N}_{u_U}$ along with the associated MCS index $m_{u_1}, m_{u_2}, \ldots, m_{u_U}$ such that it maximizes $\sum_{u \in \mathcal{U}} \varphi_u(\mathcal{N}_u, m_u)$ under the given set of constraints provided a problem instance $\mathcal{I} = [m_{u,k}]_{u \in \mathcal{U}, k \in \mathcal{N}}$ which is a matrix of size $U \times N$ is given as input.

The resulting resource allocation problem can be summarized as the following:

Inputs:

(i) Expression of the utility function $\varphi_u$

(ii) Problem instance,

$$\mathcal{I} = \begin{bmatrix} m_{u_1,k_1} & \cdots & m_{u_1,k_N} \\ \vdots & \ddots & \vdots \\ m_{u_U,k_1} & \cdots & m_{u_U,k_N} \end{bmatrix}$$

Objective:

Maximize $\sum_{u \in \mathcal{U}} \varphi_u \left( k \in \mathcal{N} \mid b_{u,k} = 1, m_u \right)$ (Sum of the utility values)

Subject to:

(i) $\sum_u b_{u,k} \leq 1, \forall k \in \mathcal{N}$ (At most one UE per SU)
(ii) $m_u \leq b_{u,k} m_{u,k} + (1 - b_{u,k}) m_M, \forall u, \forall k$ (Single MCS per UE)

where $b_{u,k} \in \{0,1\}, \forall u, \forall k$ and $m_u \in \mathcal{M}, \forall u$.

Here, $b_{u,k}$ is a binary variable which is set to 1 if the SU $k$ is allocated to the UE $u$ and otherwise set to 0.

Output: Optimal resource allocation.

Embodiments of this disclosure propose transforming the objective problem (and any constraints), for example in an Integer Linear Programming (ILP) form, into a QUBO problem. This type of problem is in a natural form for embedding into a Quantum Processing Unit (QPU) such as a quantum annealer. Therefore, the definition of variables for the QUBO may in some examples use classical pre-processing on some of the variables.

In the process of converting the classical problem (e.g. in ILP form) into QUBO form, in some examples, the following steps may be performed:

1. Convert the objective function and constraints into an expression containing only binary variables (e.g. where each binary variable is 0 or 1).

2. Transform the given constraints into an unconstrained equivalent form using appropriate quadratic penalty functions.

3. If there are any constraints present in the form of linear inequalities, we insert slack/surplus variables in the appropriate places to convert it to the general matrix equation form of **Ax** = **b,** where **A** is a matrix containing the coefficients of binary variables in the column vector **x**, and **b** is a column vector containing the constants in the system of linear equations. This **Ax** = **b** can be converted to an appropriate quadratic penalty by using the term $(Ax - b)^2$.

4. Combine the expressions of objective function and the penalty functions into a single quadratic expression equivalent to the form $x^T\mathbf{Q}x$.

5. Finally, determine the **Q** matrix from the quadratic expression in step 4. In some examples, the maximization problem may be converted into a minimization problem since the quantum annealer finds minima or ground energy of the energy function. This can be done by negating all the coefficients of the objective function.

6. The binary variables in the expression containing only binary variables in some examples represents the logical qubits in the problem graph. These may in some examples be mapped to an architecture called *Chimera graph* through the embedding process on a D-Wave quantum annealing device in particular implementations.

In particular examples, the following steps may be performed:

1. In the objective function $\varphi_u(\mathcal{N}_u, m_u) = |\mathcal{N}_u| \times index(m_u)$, the conversion of $|\mathcal{N}_u|$ and *index*$(m_u)$ into expressions containing only binary variables are as follows:

a. Perform the mapping $b_{u_i,k_j} \rightarrow x_{N(i-1)+j}$, where $i \in [1, U]$ *and* $j \in [1, N]$ to obtain *UN* binary variables starting from $x_1$ to $x_{UN}$.

b. $|\mathcal{N}_u|$ can be written as $\sum_k b_{u,k}, \forall u \in \mathcal{U}$.

c. An integer variable $a$ with known upper bound $B$ and lower bound 0 (i.e., $0 \leq a \leq B$) can be expressed using $\lfloor log_2 B \rfloor + 1$ binary variables:

$$a = x_1 + 2x_2 + 4x_3 + \ldots + 2^{\lfloor log_2 B \rfloor} x_{\lfloor log_2 B \rfloor + 1}$$

d. As the value of $m_M$ is known from the input which acts as upper bound and as the MCS index starts from 0, we can use the binary variables $x_i$, where $UN < i \leq UN + U(\lfloor log_2 m_M \rfloor + 1)$ to express each $m_u$ in a similar way as variable $a$ in point c.

2. The constraints are transformed as follows:

a. The constraint $\sum_u b_{u,k} \leq 1, \forall k \in \mathcal{N}$ can be transformed as:

i. For a constraint in the form $x + y \leq 1$, the equivalent penalty function is P($xy$), where $P$ is a positive scalar quantity which can be used to quantify the penalty. In an example, only when both $x$ and $y$ are equal to 1, the penalty function exceeds 1. Also, when the constraint is not satisfied, the penalty function will provide a penalty greater than 0 and otherwise, no penalty will be levied (e.g. the output of the penalty function is 0).
ii. Therefore, this constraint can be converted to an equivalent penalty as:

$$\sum_{i=1,U \geq j > i}^{U-1} P \left( x_{N(i-1)+1} x_{N(j-1)+1} \right)$$

b. The constraint $m_u \leq b_{u,k} m_{u,k} + (1 - b_{u,k}) m_M, \forall u, \forall k$ can be transformed as:

i. We have already expressed $m_u$ in terms of binary variables, the variables $b_{u,k}$ are already binary variables and we know the value of $m_M$ from the input. So, we may convert the inequality constraint into an equality constraint.
ii. For this, we add a slack variable $s_i$, where $i \in [1, UN]$ on the left-hand side of the inequality and we express the added slack variable in terms of binary variables as we can compute the upper bound and lower bound of the added slack variable from the resultant equation.
iii. Now, the constraint is in the matrix equation form and we follow the procedure mentioned above to add the equivalent quadratic penalty to the energy function.

3. We follow the above steps 5 & 6 to determine the **Q** matrix, and its size will be $[UN + U(\lfloor log_2 m_M \rfloor + 1) + UN(\lfloor log_2 m_M \rfloor + 1)] \times [UN + U(\lfloor log_2 m_M \rfloor + 1) + UN(\lfloor log_2 m_M \rfloor + 1)]$, in general.

Thus, in particular examples of the method 100, the method may further comprise defining an integer linear programming (ILP) problem for allocation of wireless resources to a plurality of wireless communication devices in a wireless network. The ILP problem may comprise for example the objective function defined above and also the constraints in some examples. Determination of allocation of resources for a plurality of wireless communication devices in the wireless network as a quadratic unconstrained binary optimization (QUBO) problem may expressing the ILP problem as the QUBO problem. In some examples, the ILP problem comprises a maximization problem of determining a respective subset of available scheduling units for each of the wireless communication devices so as to maximize a sum of values of a utility function for the plurality of wireless devices, wherein the value of the utility function for a wireless device indicates a throughput for that wireless device for the respective subset of available scheduling units, wherein the utility function comprises an objective function for the ILP problem. The value of the utility function for a wireless device for a subset of the available scheduling units may in some examples be based on a maximum modulation and coding scheme throughput for the wireless device for the subset of available scheduling units.
Figure 1B is a flow chart of the claimed method 120 of determining allocation of resources in a wireless network, illustrating an example of the above. Step 122 of the method 120 comprises defining an integer linear programming

(ILP) problem for allocation of wireless resources to a plurality of wireless communication devices in a wireless network, wherein the ILP problem comprises a maximization problem of determining a respective subset of available scheduling units for each of the wireless communication devices so as to maximise a sum of values of a utility function for the plurality of wireless devices, wherein the value of the utility function for a wireless device indicates a throughput for that wireless device for the respective subset of available scheduling units, the utility function comprises an objective function for the ILP problem, and the value of the utility function for a wireless device for a subset of the available scheduling units is based on a maximum modulation and coding scheme throughput for the wireless device for the subset of available scheduling units. Step 124 of the method 120 comprises expressing determination of allocation of resources for a plurality of wireless communication devices in the wireless network as a quadratic unconstrained binary optimization (QUBO) problem by expressing the ILP problem as the QUBO problem. Step 126 of the method 120 comprises executing the QUBO problem on a quantum computing device to determine the allocation of resources to the plurality of wireless communication devices in the wireless network. In some examples of the method 100 or 120, the maximum modulation and coding scheme throughput for the wireless device for the subset of available scheduling units is selected from a

matrix $\mathcal{I} = \begin{bmatrix} m_{u_1,k_1} & \cdots & m_{u_1,k_N} \\ \vdots & \ddots & \vdots \\ m_{u_U,k_1} & \cdots & m_{u_U,k_N} \end{bmatrix}$, wherein $m_{u,k}$ indicates a maximum modulation and coding scheme throughput for wireless device u (e.g. in a particular time period such as a TTI) and scheduling unit $k$, $u = u_1, \ldots, u_U$ and $k = k_1, \ldots, k_N$. The ILP problem may in some examples be a problem to maximise $\sum_{u \in \mathcal{U}} \varphi_u \left( k \in \mathcal{N} \mid b_{u,k} = 1, m_u \right)$, where $\mathcal{U}$ is a set comprising the plurality of wireless communication devices, $\widetilde{\phantom{...}}$ is a set of available scheduling units, $\varphi_u$ is the utility function for wireless device u, $m_u$ indicates a maximum modulation and coding scheme throughput for the wireless device for the subset of available scheduling units where $k \in \mathcal{N} \mid b_{u,k} = 1$, and $b_{u,k}$ is a binary variable that is 1 if scheduling unit $k$ is allocated to wireless device $u$ and a value other than 1 if scheduling unit $k$ is not allocated to the wireless device $u$.

The utility function may for example include one or more constraints including a first constraint whereby each available scheduling unit may be allocated to a maximum of one UE, and/or a second constraint whereby each wireless device may use a single modulation and coding scheme for the subset of available scheduling units. $b_{u,k}$, $u = u_1, \ldots, u_U$, $k = k_1, \ldots, k_N$ may indicate a solution to the ILP problem.

Expressing the ILP problem as the QUBO problem in some examples may comprise the following steps:

- negating coefficients of the objective function of the ILP problem;
- converting the objective function of the ILP problem into an expression containing only binary variables;
- transforming one or more constraints of the objective function into an unconstrained form using quadratic penalty functions, including converting any constraints in the form of linear inequalities to a general matrix equation form **Ax = b,** where **A** is a matrix containing coefficients of binary variables in the column vector **x**, and **b** is a column vector containing the constants in the system of linear equations, wherein the first constraint comprises $\sum_u b_{u,k} \leq 1, \forall k \in \mathcal{N}$ and/or the second constraint comprises

$$m_u \leq b_{u,k} m_{u,k} + (1 - b_{u,k}) m_M, \forall u, \forall k;$$

- combining the expression containing only binary variables and the penalty functions into a single quadratic expression equivalent to the form $\mathbf{x}^T \mathbf{Q} \mathbf{x}$; and
- determining the matrix **Q** from the quadratic expression.

The binary variables in the expression containing only binary variables may represent logical qubits in a problem graph for the quantum computing device.

The utility function may for example comprise $\varphi_u(\mathcal{N}_u, m_u) = |\mathcal{N}_u| \times index(m_u)$. Converting the objective function of the ILP problem into the expression containing only binary variables may then comprise mapping $b_{u_i,k_j} \to x_{N(i-1)+j}$, where $i \in [1, U]$ and $j \in [1, N]$ to obtain $UN$ binary variables $x_1$ to $x_{UN}$, wherein $U$ is the number of wireless devices and $N$ is the number of available scheduling units. In some examples, $\sum_k b_{u,k} \leq 1, \forall u \in \mathcal{U}$.

Converting the objective function of the ILP problem into the expression containing only binary variables may comprise for example expressing each $m_u$ as one of the binary variables. For example, the expression suggested above for conversion into binary variables may be used. The method 100 may in some examples comprise transforming the constraint $\Sigma_u b_{u,k} \leq 1$,

$$\forall k \in \mathcal{N}$$

to a quadratic penalty function, $\sum_{i=1,U \geq j > i}^{U-1} P\left(x_{N(i-1)+1} x_{N(j-1)+1}\right)$.

In some examples, transforming the inequality constraint $m_u \leq b_{u,k} m_{u,k} + (1 - b_{u,k}) m_M, \forall u, \forall k$. to a quadratic penalty function comprises:

adding a slack variable $s_i, i \in [1, UN]$ to the left side of the inequality constraint and expressing slack variable in terms of binary variables to convert the inequality constraint to a matrix equation form; and
converting the matrix equation form to a quadratic penalty function using the term $(Ax - b)^2$.

Once allocation of the resources in the wireless network is determined, the method 100 may comprise allocating the resources in the wireless network according to a result of executing the QUBO problem on the quantum computing device. Alternatively, the allocation may be sent to another network node that performs the allocation of resources.

A particular worked example of expressing an ILP problem as a QUBO problem will now be described. Consider a wireless network with two UEs (wireless devices) and two scheduling units (SUs), for example in one TTI. In this example the most efficient MCS index that UE 1 can use in SU 1 is 3, and in SU 2 is 1. The most efficient MCS index that UE 2 can use in SU 1 is 4, and in SU 2 is 2.

The problem instance matrix is $I = (m_{u,k})_{u,k}$:

$$I = (m_{u,k})_{u \in U, k \in N} = \begin{bmatrix} 3 & 1 \\ 4 & 2 \end{bmatrix}$$

For example, on selecting a single MCS, the UE 1 needs to select either 3 or 1 whereas the UE 2 needs to select either 4 or 2. This selection for an MCS for each UE depends on the SUs allocated to that UE. For instance, assume that UE 1 is allocated with both SU 1 and SU 2 and UE 2 is not allocated with any of the SUs. Then, UE 1 will select the MCS index 1 as the UE needs to select the minimum MCS index for all allocated SUs as described above (e.g. because the UE cannot transmit or receive at a higher MCS in certain SUs).

The most optimal solution has a utility value $\varphi = 5$. Here, two solutions are possible.

Solution 1

UE 1 is assigned with SU1 (MCS index 3), UE 2: SU2 (MCS index 2)

Utility value: $(1 \times 3) + (1 \times 2) = 5$

Solution 2

UE 1: SU2 (mcs index 1), UE 2: SU1 (mcs index 4)

Utility value: $(1 \times 1) + (1 \times 4) = 5$

The next most optimal solution has a utility value, $\varphi = 4$.

UE 1: $\phi$ (nothing assigned), UE 2: SU1, SU2 (MCS index 2 by selecting the min{4, 2})

Utility value: $0 + (2 \times 2) = 4$

The steps followed to express the determination of allocation of resources for a plurality of wireless communication devices in the wireless network problem as a quadratic unconstrained binary optimization (QUBO) problem are as follows.

1. Mapping the binary variables:

$$b_{u_1,k_1} \rightarrow x_1$$

$$b_{u_1,k_2} \rightarrow x_2$$

$$b_{u_2,k_1} \rightarrow x_3$$

$$b_{u_2,k_2} \rightarrow x_4$$

2. Objective: Maximize $\sum_{u \in U} \varphi(\{k \in \mathcal{N} | b_{u,k} = 1\}, m_u)$ .

Utility function: $\varphi(\mathcal{N}_u, m_u) = |\mathcal{N}_u| \times index(m_u)$

The objective function is then written as,

Maximize $\sum_u ((\sum_k b_{u,k}) \times (m_u))$ , $u \in$, $k \in \mathcal{N}$

Here, $m_u \in \{1,2,3,4\}$ with $m_M = 4$.

The objective function can be written using binary variables as,

$(x_1 + x_2)(1.x_5 + 2.x_6 + 4.x_7) + (x_3 + x_4)(1.x_8 + 2.x_9 + 4.x_{10})$ where $x_i$ is binary variable.

Now, negate all the coefficients of the objective function (to convert maximization problem into minimization problem):

The objective function is,

$$(x_1 + x_2)(1.x_5 + 2.x_6 + 4.x_7) + (x_3 + x_4)(1.x_8 + 2.x_9 + 4.x_{10})$$
$$= x_1x_5 + 2x_1x_6 + 4x_1x_7 + x_2x_5 + 2x_2x_6 + 4x_2x_7 + x_3x_8 + 2x_3x_9 + 4x_3x_{10} + x_4x_8 + 2x_4x_9$$
$$+ 4x_4x_{10}$$

Negating all the coefficients, we get

$$= -x_1x_5 - 2x_1x_6 - 4x_1x_7 - x_2x_5 - 2x_2x_6 - 4x_2x_7 - x_3x_8 - 2x_3x_9 - 4x_3x_{10} - x_4x_8 - 2x_4x_9$$
$$- 4x_4x_{10}$$

3. Constraints:

*Constraint 1:*

$$\sum_u b_{u,k} \leq 1, \forall k \in N$$

Take $k_1$: $b_{u_1,k_1} + b_{u_2,k_1} \leq 1 \implies x_1 + x_3 \leq 1 \implies P(x_1x_3)$

Take $k_2$: $b_{u_1,k_2} + b_{u_2,k_2} \leq 1 \implies x_2 + x_4 \leq 1 \implies P(x_2x_4)$

For all $k$, the penalty will be: $P(x_1x_3) + P(x_2x_4) = P(x_1x_3 + x_2x_4)$

*Constraint 2:*

$$m_u \leq b_{u,k} m_{u,k} + (1 - b_{u,k}) m_M, \forall u, \forall k$$

1. $m_{u_1} \leq 3x_1 + 4(1 - x_1)$ **for** $u_1$, $k_1$

$$\Rightarrow \quad m_{u_1} \leq -1x_1 + 4$$

$$\Rightarrow m_{u_1} + s_1 = -1.x_1 + 4$$

$$\Rightarrow P(1.x_5 + 2.x_6 + 4.x_7 + (1.x_{11} + 2.x_{12} + 4.x_{13}) + x_1 - 4)^2$$

($m_{u_1}$ and slack variable $s_1$ - by calculating its upper bound - are expressed using the binary variables)

2. $m_{u_1} \leq 1x_2 + 4(1 - x_2)$ for $u_1$, $k_2$

$$\Rightarrow P(1.x_5 + 2.x_6 + 4.x_7 + (1.x_{14} + 2.x_{15} + 4.x_{16}) + 3x_2 - 4)^2$$

3. $m_{u_2} \leq 4x_3 + 4(1 - x_3)$ for $u_2$, $k_1$

$$\Rightarrow P(1.x_8 + 2.x_9 + 4.x_{10} + (1.x_{17} + 2.x_{18} + 4.x_{19}) + 0x_3 - 4)^2$$

4. $m_{u_2} \leq 2x_4 + 4(1 - x_4)$ for $u_2$, $k_2$

$$\Rightarrow P(1.x_8 + 2.x_9 + 4.x_{10} + (1.x_{20} + 2.x_{21} + 4.x_{22}) + 2x_4 - 4)^2$$

Summing up the constraints (penalty terms) to the objective, we get

$$= -x_1 x_5 - 2x_1 x_6 - 4x_1 x_7 - x_2 x_5 - 2x_2 x_6 - 4x_2 x_7 - x_3 x_8 - 2x_3 x_9 - 4x_3 x_{10} - x_4 x_8 - 2x_4 x_9 - 4x_4 x_{10}$$

$$+ \ P(1.x_5 + 2.x_6 + 4.x_7 + (1.x_{11} + 2.x_{12} + 4.x_{13}) + x_1 - 4)^2$$

$$+ \ P(1.x_5 + 2.x_6 + 4.x_7 + (1.x_{14} + 2.x_{15} + 4.x_{16}) + 3x_2 - 4)^2$$

$$+ \ P(1.x_8 + 2.x_9 + 4.x_{10} + (1.x_{17} + 2.x_{18} + 4.x_{19}) + 0x_3 - 4)^2$$

$$+ \ P(1.x_8 + 2.x_9 + 4.x_{10} + (1.x_{20} + 2.x_{21} + 4.x_{22}) + 2x_4 - 4)^2$$

where P is the Lagrangian multiplier (can be viewed as penalty weightage).
Replace P with appropriate value and expand the expression. This is then the QUBO form of our original problem.
After expanding, place the coefficient of each term in the appropriate place of the Q matrix. For instance, the first term of the resulting expression is $-x_1 x_5$. So, place -1 in the 1$^{st}$ row and 5$^{th}$ column of the Q matrix. This may be similarly performed for all the terms and put 0 in the empty positions of the matrix. This produces the final Q matrix which is of size 22 × 22 as there are 22 binary variables.

Cross-verification:

We have claimed that the Q matrix will be of size,

$$[UN + U(\lfloor log_2 m_M \rfloor + 1) + UN(\lfloor log_2 m_M \rfloor + 1)] \times [UN + U(\lfloor log_2 m_M \rfloor + 1) + UN(\lfloor log_2 m_M \rfloor + 1)]$$

In this example problem,
$U = 2$, $N = 2$, $m_M = 4$. Substituting these values, we get:

$$[(2)(2) + 2(2 + 1) + (2)(2)(2 + 1)] \times [(2)(2) + 2(2 + 1) + (2)(2)(2 + 1)]$$

$$= [4+6+12] \times [4+6+12] = 22 \times 22.$$

The QUBO problem is therefore now complete and may be executed on a quantum computing device such as a quantum annealer.

In a particular implementation, the QUBO form of the resource allocation problem has been formulated using the python package "qubovert". Initially, the objective function is using the methodology disclosed herein, and the appropriate value is calculated for the Lagrangian multiplier which works well for most of the cases, using the coefficients of the objective function. Two different values are used for denoting this weightage of the penalty, as constraint (i) above may need to be satisfied strictly in some examples. A model which holds this objective function is created, and then reformed constraints are added one by one to this model. This results in a Polynomial Unconstrained Binary Optimization (PUBO) form which is a polynomial of degree 3. This PUBO problem is converted to a second-degree polynomial in order to represent this model in QUBO form and make the Q matrix in QUBO as an upper triangular matrix, which may be a requirement to embed the problem in a quantum computing device (e.g. a quantum annealer) and apply quantum annealing. An appropriate value is also determined for the chain strength using the maximum and minimum values of the elements of the Q matrix and it is set such that there will be a small number of chain breaks.

For comparing the performance of our quantum annealing approach of solving this resource allocation problem with classical methods, three different metaheuristic algorithms are used along with the quantum approach, and the runtime of the annealing process is compared. The implemented algorithms are:

1. Qubovert's simulated annealing (Classical method 1)
2. D-Wave's simulated annealer (Classical method 2)
3. D-Wave's quantum annealer (DW_2000Q)
4. Leap's hybrid solver (Classical + Quantum)

As the number of binary variables in the QUBO form of the resource allocation problem instance is very high when the problem size increases and the problem graph is also less sparsely connected, present hardware for quantum computing devices may limit the size of the problem. In an example, the size of the problem graph that can be successfully embedded in a quantum computing device may have the following properties:

a) Number of wireless communication devices (e.g. UEs) = 5
b) Number of Scheduling Units = 6

where the maximum MCS index is set as 31.

Experiments have been performed by setting the maximum MCS index as 31, number of SUs as 6 and by increasing the number of UEs from 2 to the limiting case of 6 suggested above. Also, the $U \times N$ matrix containing the most efficient MCS for each pair of $u$ and $k$ is generated using the random number generation function within the range as [0, 31] for the purpose of the experiments.

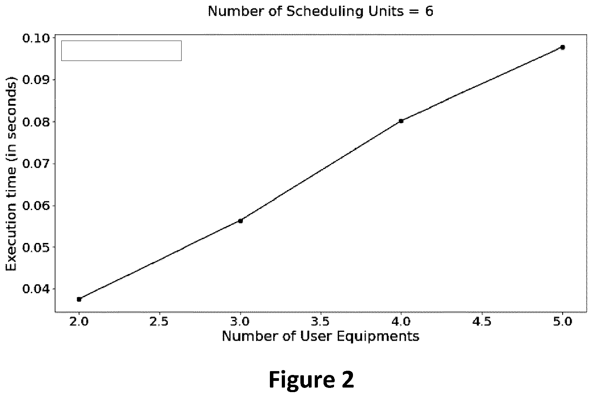

For algorithm 1 (Classical method 1), the PUBO constructed in the process of forming the QUBO form of resource allocation problem instance was used for qubovert's simulated annealing. Figure 2 shows an example of the execution time to complete one anneal (qubovert's simulated annealing) to solve the problem when the number of UEs is increased.

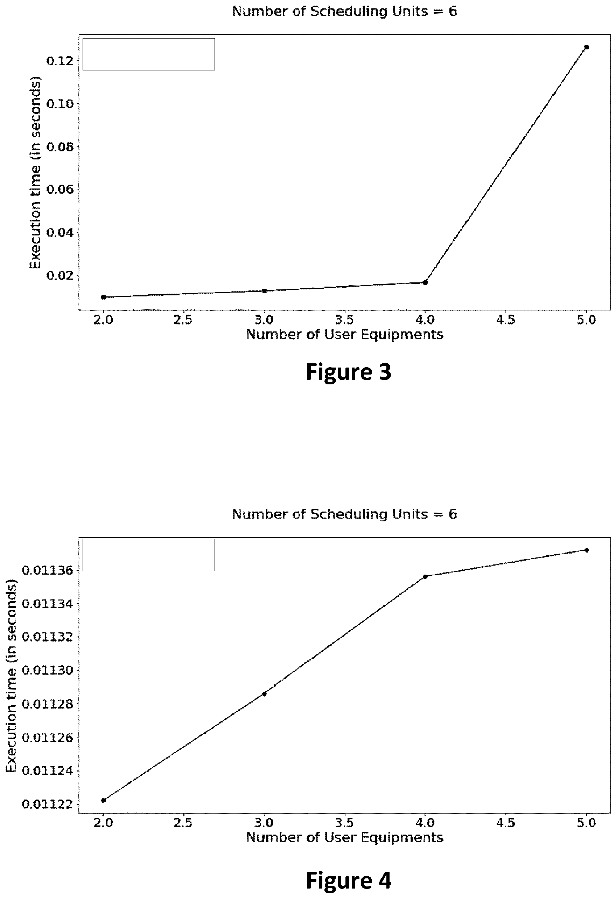

For algorithm 2 (Classical method 2), the Binary Quadratic Model (BQM) obtained from the problem instance was given as input to the D-Wave's Simulated Annealing sampler and the execution time vs number of UEs is shown in Figure 3.

For algorithm 3 (Quantum), this approach is used by embodiments of this disclosure to solve the resource allocation problem. The inputs given to the quantum computing device (e.g. quantum annealer) are the QUBO form of the problem and the chain strength value. The experiment is performed on the D-Wave quantum processing unit (DW_2000Q_6) with following configuration:

a) Number of qubits: 2041

b) Qubit temperature (mK): 13.5±1

The experimental result obtained is shown in Figure 4, which plots the QPU access time when the number of UEs is varied.

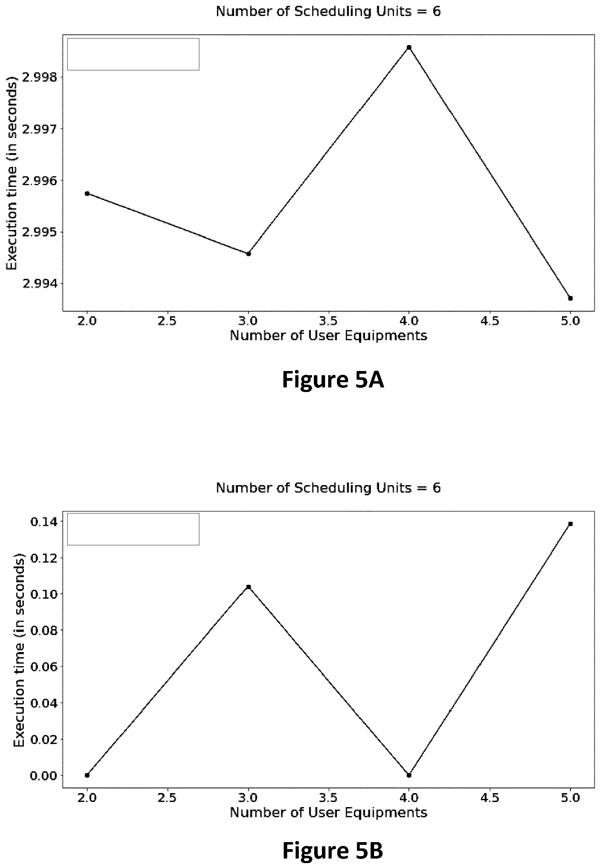

For algorithm 4 (Hybrid), the Leap's cloud-based quantum-classical hybrid sampler was used to solve the problem, and the results are shown separately in Figure 5A for the total runtime and in Figure 5B for the quantum processing unit access time.

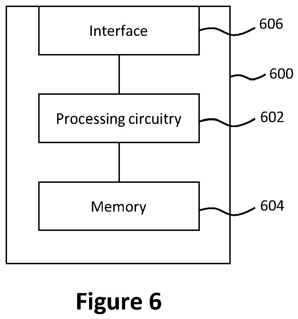

Figure 6 is a schematic of an example of an apparatus 600 for determining allocation of resources in a wireless network. The apparatus 600 comprises processing circuitry 602 (e.g. one or more processors) and a memory 604 in communication with the processing circuitry 602. The memory 604 contains instructions executable by the processing circuitry 602. The apparatus 600 also comprises an interface 606 in communication with the processing circuitry 602. Although the interface 606, processing circuitry 602 and memory 604 are shown connected in series, these may alternatively be interconnected in any other way, for example via a bus.

In one embodiment, the memory 604 contains instructions executable by the processing circuitry 602 such that the apparatus 600 is operable to express determination of allocation of resources for a plurality of wireless communication devices in the wireless network as a quadratic unconstrained binary optimization (QUBO) problem, and execute the QUBO problem on a quantum computing device to determine the allocation of resources to the plurality of wireless communication devices in the wireless network. In some examples, the apparatus 600 is operable to carry out the method 100 described above with reference to Figure 1B.

It should be noted that the above-mentioned examples illustrate rather than limit the invention, and that those skilled in the art will be able to design many alternative examples without departing from the scope of the appended claims. The word "comprising" does not exclude the presence of elements or steps other than those listed in a claim, "a" or "an" does not exclude a plurality, and a single processor or other unit may fulfil the functions of several units recited in the statements below. Where the terms, "first", "second" etc. are used they are to be understood merely as labels for the convenient identification of a particular feature. In particular, they are not to be interpreted as describing the first or the second feature of a plurality of such features (i.e. the first or second of such features to occur in time or space) unless explicitly stated otherwise. Any reference signs in the statements shall not be construed so as to limit their scope.

**Claims**

1. A method (100, 200) of determining allocation of resources in a wireless network, the method comprising:

   defining an integer linear programming, ILP, problem for allocation of wireless resources to a plurality of wireless communication devices in the wireless network, wherein the ILP problem comprises a maximization problem of determining a respective subset of available scheduling units for each of the wireless communication devices so as to maximise a sum of values of a utility function for the plurality of wireless devices, wherein the value of the utility function for a wireless device indicates a throughput for that wireless device for the respective subset of available scheduling units, wherein the utility function comprises an objective function for the ILP problem;
   expressing (124) determination of allocation of resources for a plurality of wireless communication devices in the wireless network as a quadratic unconstrained binary optimization, QUBO, problem, comprising expressing the ILP problem as the QUBO problem; and
   executing (104, 126) the QUBO problem on a quantum computing device to determine the allocation of resources to the plurality of wireless communication devices in the wireless network.

2. The method of claim 1, wherein the value of the utility function for a wireless device for a subset of the available scheduling units is based on a maximum modulation and coding scheme throughput for the wireless device for the subset of available scheduling units.

3. The method of claim 2, wherein the maximum modulation and coding scheme throughput for the wireless device for the subset of available scheduling units is selected from a matrix $\mathcal{J} = \begin{bmatrix} m_{u_1,k_1} & \cdots & m_{u_1,k_N} \\ \vdots & \ddots & \vdots \\ m_{u_U,k_1} & \cdots & m_{u_U,k_N} \end{bmatrix}$, wherein $m_{u,k}$ indicates a maximum modulation and coding scheme throughput for wireless device u and scheduling unit $k$, $u = u_1, ..., u_U$ and $k = k_1, ..., k_N$.

**4.**

The method of claim 3, wherein the ILP problem is a problem to maximise $\sum_{u \in \mathcal{U}} \varphi_u ( k \in \mathcal{N} | b_{u,k} = 1, m_u )$, where $\mathcal{U}$ is a set comprising the plurality of wireless communication devices, $\mathcal{N}$ is a set of available scheduling units, $\varphi_u$ is the utility function for wireless device $u$, $m_u$ indicates a maximum modulation and coding scheme throughput for the wireless device for the subset of available scheduling units where $k \in \mathcal{N} | b_{u,k}$ = 1, and $b_{u,k}$ is a binary variable that is 1 if scheduling unit k is allocated to wireless device $u$ and a value other than 1 if scheduling unit $k$ is not allocated to the wireless device $u$.

5. The method of claim 4, wherein the utility function includes one or more constraints including a first constraint whereby each available scheduling unit may be allocated to a maximum of one UE, and/or a second constraint whereby each wireless device may use a single modulation and coding scheme for the subset of available scheduling units.

6. The method of any of claims 1 to 5, wherein expressing the ILP problem as the QUBO problem comprises:

negating coefficients of the objective function of the ILP problem;
converting the objective function of the ILP problem into an expression containing only binary variables;
transforming one or more constraints of the objective function into an unconstrained form using quadratic penalty functions, including converting any constraints in the form of linear inequalities to a general matrix equation form **Ax = b,** where **A** is a matrix containing coefficients of binary variables in the column vector **x**, and **b** is a column vector containing the constants in the system of linear equations, wherein the first constraint comprises $\Sigma_u b_{u,k} \leq 1, \forall k \in \mathcal{N}$ and/or the second constraint comprises $m_u \leq b_{u,k} m_{u,k} + (1 - b_{u,k}) m_M, \forall u, \forall k$;
combining the expression containing only binary variables and the penalty functions into a single quadratic expression equivalent to the form $\mathbf{x}^T\mathbf{Q}\mathbf{x}$.
determining the matrix **Q** from the quadratic expression;
wherein the binary variables in the expression containing only binary variables represent logical qubits in a problem graph for the quantum computing device.

7. The method of claim 6, wherein converting the objective function of the ILP problem into the expression containing only binary variables comprises expressing each $m_u$ as one of the binary variables.

8. The method of any of claims 6 or 7, comprising transforming the constraint $\Sigma_u b_{u,k} \leq 1, \forall k \in \mathcal{N}$ to a quadratic penalty function $\sum_{i=1, U \geq j > i}^{U-1} P \left( x_{N(i-1)+1} x_{N(j-1)+1} \right)$.

9. The method of any of claims 6 to 8, wherein transforming the inequality constraint $m_u \leq b_{u,k} m_{u,k} + (1 - b_{u,k}) m_M, \forall u, \forall k$ to a quadratic penalty function comprises:

adding a slack variable $s_i, i \in [1, UN]$ to the left side of the inequality constraint and expressing slack variable in terms of binary variables to convert the inequality constraint to a matrix equation form; and
converting the matrix equation form to a quadratic penalty function using the term $(Ax - b)^2$.

10. The method of any of claims 1 to 9, comprising allocating the resources in the wireless network according to a result of executing the QUBO problem on the quantum computing device.

11. The method of any of claims 1 to 10, wherein executing the QUBO problem on the quantum computing device comprises performing a quantum annealing process.

12. The method of any of claims 1 to 11, wherein the resources in the wireless network comprise resources for wireless communication between the plurality of wireless communication devices and one or more base stations.

13. A computer program comprising instructions which, when executed on at least one processor, cause the at least one processor to carry out a method according to any of claims 1 to 12.

14. Apparatus (600) for determining allocation of resources in a wireless network, the apparatus comprising a processor (602) and a memory (604), the memory containing instructions executable by the processor such that the apparatus is operable to:

define an integer linear programming, ILP, problem for allocation of wireless resources to a plurality of wireless communication devices in the wireless network, wherein the ILP problem comprises a maximization problem of determining a respective subset of available scheduling units for each of the wireless communication devices so as to maximise a sum of values of a utility function for the plurality of wireless devices, wherein the value of the utility function for a wireless device indicates a throughput for that wireless device for the respective subset of available scheduling units, wherein the utility function comprises an objective function for the ILP problem;
express determination of allocation of resources for a plurality of wireless communication devices in the wireless network as a quadratic unconstrained binary optimization, QUBO, problem, comprising the ILP problem being expressed as the QUBO problem; and
execute the QUBO problem on a quantum computing device to determine the allocation of resources to the plurality of wireless communication devices in the wireless network.

15. The apparatus of claim 14, wherein the memory contains instructions executable by the processor such that the apparatus is operable to perform the method of any of claims 2 to 12.

**Patentansprüche**

1. Verfahren (100, 200) zur Bestimmung von Zuweisung von Ressourcen in einem drahtlosen Netzwerk, wobei das Verfahren umfasst:

Definieren eines Problems einer ganzzahligen linearen Programmierung, ILP, zur Zuweisung drahtloser Ressourcen zu einer Mehrzahl von drahtlosen Kommunikationsvorrichtungen im drahtlosen Netzwerk, wobei das ILP-Problem ein Maximierungsproblem des Bestimmens einer jeweiligen Teilmenge verfügbarer Dispositionseinheiten für jede der drahtlosen Kommunikationsvorrichtungen umfasst, um eine Summe von Werten einer Nutzenfunktion für die Mehrzahl von drahtlosen Vorrichtungen zu maximieren, wobei der Wert der Nutzenfunktion für eine drahtlose Vorrichtung einen Durchsatz für diese drahtlose Vorrichtung für die jeweilige Teilmenge verfügbarer Dispositionseinheiten angibt, wobei die Nutzenfunktion eine Zielfunktion für das ILP-Problem umfasst;
Ausdrücken (124) einer Bestimmung der Zuweisung von Ressourcen für eine Mehrzahl von drahtlosen Kommunikationsvorrichtungen im drahtlosen Netzwerk als Problem einer quadratischen unrestringierten binären Optimierung, QUBO, umfassend ein Ausdrücken des ILP-Problems als das QUBO-Problem;
Ausführen (104, 126) des QUBO-Problems auf einer Quantencomputervorrichtung, um die Zuweisung von Ressourcen zu der Mehrzahl von drahtlosen Kommunikationsvorrichtungen im drahtlosen Netzwerk zu bestimmen.

2. Verfahren nach Anspruch 1, wobei der Wert der Nutzenfunktion für eine drahtlose Vorrichtung für eine Teilmenge der verfügbaren Dispositionseinheiten auf einem maximalen Modulations- und Codierungsschema-Durchsatz für die drahtlose Vorrichtung für die Teilmenge verfügbarer Dispositionseinheiten basiert.

3. Verfahren nach Anspruch 2, wobei der maximale Modulations- und Codierungsschema-Durchsatz für die drahtlose Vorrichtung für die Teilmenge verfügbarer Dispositionseinheiten aus einer Matrix $\mathcal{I} = \begin{bmatrix} m_{u_1,k_1} & \cdots & m_{u_1,k_N} \\ \vdots & \ddots & \vdots \\ m_{u_U,k_1} & \cdots & m_{u_U,k_N} \end{bmatrix}$ ausgewählt wird, wobei $m_{u,k}$ einen maximalen Modulations- und Codierungsschema-Durchsatz für die drahtlose Vorrichtung u und die Dispositionseinheit $k$ angibt, wobei u = $u_1, ..., u_U$ und $k = k_1, ..., k_N$.

4. Verfahren nach Anspruch 3, wobei das ILP-Problem ein Problem zur Maximierung von

$$\sum_{u \in \mathcal{U}} \phi_u \big( k \in N | b_{u,k} = 1, m_u \big)$$

ist, wobei $\mathcal{U}$ ein Satz ist, der die Mehrzahl von drahtlosen Kommunikationsvorrichtungen umfasst, $\mathcal{N}$ ein Satz verfügbarer Dispositionseinheiten ist, $\phi_u$ die Nutzenfunktion für die drahtlose Vorrichtung $u$ ist, $m_u$ einen maximalen Modulations- und Codierungsschema-Durchsatz für die drahtlose Vorrichtung für die Teilmenge verfügbarer Dispositionseinheiten angibt, wobei $k \in N | b_{u,k} = 1$, und $b_{u,k}$ eine binäre Variable ist, die 1 ist, wenn die Dispositionseinheit $k$ der drahtlosen Vorrichtung $u$ zugewiesen wird, und ein anderer Wert als 1 ist, wenn die Dispositionseinheit $k$ der drahtlosen Einheit u nicht zugewiesen wird.

5. Verfahren nach Anspruch 4, wobei die Nutzenfunktion eine oder mehrere Restriktionen umfasst, die eine erste Restriktion, wobei jede verfügbare Dispositionseinheit einem Maximum von einer UE zugewiesen werden kann, und/oder eine zweite Restriktion umfassen, wobei jede drahtlose Vorrichtung ein einziges Modulations- und Codierungsschema für die Teilmenge verfügbarer Dispositionseinheiten verwenden kann.

6. Verfahren nach einem der Ansprüche 1 bis 5, wobei das Ausdrücken des ILP-Problems als das QUBO-Problem umfasst:

Negieren von Koeffizienten der Zielfunktion des ILP-Problems;
Konvertieren der Zielfunktion des ILP-Problems in einen Ausdruck, der nur binäre Variablen enthält;
Transformieren einer oder mehrerer Restriktionen der Zielfunktion in eine unrestringierte Form unter Verwendung quadratischer Straffunktionen, umfassend ein Konvertieren jeglicher Restriktionen in Form linearer Ungleichheiten in eine allgemeine Matrixgleichungsform Ax = b, wobei A eine Matrix ist, die Koeffizienten von binären Variablen im Spaltenvektor x enthält, und b ein Spaltenvektor ist, der die Konstanten im System von linearen Gleichungen enthält, wobei die erste Restriktion $\Sigma_u b_{u,k} \leq 1, \forall k \in \mathcal{N}$ umfasst und die zweite Restriktion $m_{u'} \leq b_{u,k} m_{u,k} + (1 - b_{u,k}) m_M, \forall u, \forall k$ umfasst;
Kombinieren des Ausdrucks, der nur binäre Variablen umfasst, und der Straffunktionen zu einem einzigen quadratischen Ausdruck, der der Form $x^T Q x$ entspricht;
Bestimmen der Matrix Q aus dem quadratischen Ausdruck;
wobei die binären Variablen im Ausdruck nur binäre Variablen enthalten, die logische Qubits in einem Problemgraphen für die Quantencomputervorrichtung darstellen.

7. Verfahren nach Anspruch 6, wobei das Konvertieren der Zielfunktion des ILP-Problems in den Ausdruck, der nur binäre Variablen enthält, ein Ausdrücken von jedem $m_u$ als eine der binären Variablen umfasst.

8. Verfahren nach einem der Ansprüche 6 oder 7, umfassend ein Transformieren der Restriktion $\Sigma_u b_{u,k} \leq 1, \forall k \in \mathcal{N}$

in eine quadratische Straffunktion $\displaystyle\sum_{i=1, U \geq j > i}^{U-1} P\left(x_{N(i-1)+1} x_{N(j-1)+1}\right)$.

9. Verfahren nach einem der Ansprüche 6 bis 8, wobei das Transformieren der Ungleichungsrestriktion $m_u \leq b_{u,k} m_{u,k} + (1 - b_{u,k}) m_M, \forall u, \forall k$ in eine quadratische Straffunktion umfasst:

Addieren einer Schlupfvariable $s_i, i \in [1, UN]$ zur linken Seite der Ungleichungsrestriktion und Ausdrücken der Schlupfvariable in Form von binären Variablen zum Konvertieren der Ungleichungsrestriktion in eine Matrixgleichungsform; und
Konvertieren der Matrixgleichungsform in eine quadratische Straffunktion unter Verwendung des Terms $(Ax - b)^2$.

10. Verfahren nach einem der Ansprüche 1 bis 9, umfassend ein Zuweisen der Ressourcen im drahtlosen Netzwerk gemäß einem Ergebnis der Ausführung des QUBO-Problems auf der Quantencomputervorrichtung.

11. Verfahren nach einem der Ansprüche 1 bis 10, wobei das Ausführen des QUBO-Problems auf der Quantencomputervorrichtung ein Durchführen eines Quantentemperprozesses umfasst.

12. Verfahren nach einem der Ansprüche 1 bis 11, wobei die Ressourcen im drahtlosen Netzwerk Ressourcen für drahtlose Kommunikation zwischen der Mehrzahl von drahtlosen Kommunikationsvorrichtungen und einer oder mehreren Basisstationen umfasst.

13. Computerprogramm, umfassend Anweisungen, die bei Ausführung auf mindestens einem Prozessor den mindestens einen Prozessor zum Durchführen eines Verfahrens nach einem der Ansprüche 1 bis 12 veranlassen.

14. Einrichtung (600) zum Bestimmen von Zuweisung von Ressourcen in einem drahtlosen Netzwerk, wobei die Einrichtung einen Prozessor (602) und einen Speicher (604) umfasst, wobei der Speicher Anweisungen enthält, die vom Prozessor ausgeführt werden können, derart dass die Einrichtung ausgelegt ist zum:

Definieren eines Problems einer ganzzahligen linearen Programmierung, ILP, zur Zuweisung drahtloser Ressourcen zu einer Mehrzahl von drahtlosen Kommunikationsvorrichtungen im drahtlosen Netzwerk, wobei das ILP-Problem ein Maximierungsproblem des Bestimmens einer jeweiligen Teilmenge verfügbarer Dispositionseinheiten für jede der drahtlosen Kommunikationsvorrichtungen umfasst, um eine Summe von Werten einer Nutzenfunktion für die Mehrzahl von drahtlosen Vorrichtungen zu maximieren, wobei der Wert der Nutzenfunktion für eine drahtlose Vorrichtung einen Durchsatz für diese drahtlose Vorrichtung für die jeweilige Teilmenge verfügbarer Dispositionseinheiten angibt, wobei die Nutzenfunktion eine Zielfunktion für das ILP-Problem umfasst;

Ausdrücken einer Bestimmung der Zuweisung von Ressourcen für eine Mehrzahl von drahtlosen Kommunikationsvorrichtungen im drahtlosen Netzwerk als Problem einer quadratischen unrestringierten binären Optimierung, QUBO, umfassend, dass das ILP-Problem als das QUBO-Problem ausgedrückt wird; und

Ausführen des QUBO-Problems auf einer Quantencomputervorrichtung, um die Zuweisung von Ressourcen zu der Mehrzahl von drahtlosen Kommunikationsvorrichtungen im drahtlosen Netzwerk zu bestimmen.

**15.** Einrichtung nach Anspruch 14, wobei der Speicher Anweisungen enthält, die vom Prozessor ausgeführt werden können, derart dass die Einrichtung zum Durchführen des Verfahrens nach einem der Ansprüche 2 bis 12 ausgelegt ist.

**Revendications**

**1.** Procédé (100, 200) de détermination d'attribution de ressources dans un réseau sans fil, le procédé comprenant :

la définition d'un problème de programmation linéaire en nombres entiers, ILP, pour une attribution de ressources sans fil à une pluralité de dispositifs de communication sans fil dans le réseau sans fil, dans lequel le problème ILP comprend un problème de maximisation pour la détermination d'un sous-ensemble respectif d'unités de planification disponibles pour chacun des dispositifs de communication sans fil de manière à maximiser une somme de valeurs d'une fonction d'utilité pour la pluralité de dispositifs sans fil, dans lequel la valeur de la fonction d'utilité pour un dispositif sans fil indique un débit pour ce dispositif sans fil pour le sous-ensemble respectif d'unités de planification disponibles, dans lequel la fonction d'utilité comprend une fonction objective pour le problème ILP ;

l'expression (124) d'une détermination d'attribution de ressources pour une pluralité de dispositifs de communication sans fil dans le réseau sans fil sous forme d'un problème d'optimisation binaire sans contrainte quadratique, QUBO, comprenant l'expression du problème ILP sous forme du problème QUBO ; et

l'exécution (104, 126) du problème QUBO sur un dispositif de calcul quantique pour déterminer l'attribution de ressources à la pluralité de dispositifs de communication sans fil dans le réseau sans fil.

**2.** Procédé selon la revendication 1, dans lequel la valeur de la fonction d'utilité pour un dispositif sans fil pour un sous-ensemble des unités de planification disponibles est basée sur un débit maximal de schéma de modulation et de codage pour le dispositif sans fil pour le sous-ensemble d'unités de planification disponibles.

**3.** Procédé selon la revendication 2, dans lequel le débit maximal de schéma de modulation et de codage pour le dispositif sans fil pour le sous-ensemble d'unités de planification disponibles est sélectionné à partir d'une matrice

$$\mathcal{J} = \begin{bmatrix} m_{u_1,k_1} & \cdots & m_{u_1,k_N} \\ \vdots & \ddots & \vdots \\ m_{u_U,k_1} & \cdots & m_{u_U,k_N} \end{bmatrix}$$

, dans lequel $m_{u,k}$ indique un débit maximal de schéma de modulation et de codage pour un dispositif u et une unité de planification k, $u = u_1,...,u_U$ et $k=k_1,...,k_N$.

**4.** Procédé selon la revendication 3, dans lequel le problème ILP est un problème pour maximiser

$$\sum_{u\in\mathcal{U}} \varphi_u\big(k \in \mathcal{N}\,\big|\,b_{u,k} = 1, m_u\big)$$

, où $\mathcal{U}$ est un ensemble comprenant la pluralité de dispositifs de communication sans fil, $\mathcal{N}$ est un ensemble d'unités de planification disponibles, $\varphi_u$ est la fonction d'utilité pour un dispositif

sans fil u, $m_u$ indique un débit maximal de schéma de modulation et de codage pour le dispositif sans fil pour le sous-ensemble d'unités de planification disponibles où $k \in$ | $b_{u,k}$ = 1 et $b_{u,k}$ est une variable binaire qui est 1 si une unité de planification k est attribuée à un dispositif sans fil u et une valeur autre que 1 si une unité de planification k n'est pas attribuée au dispositif sans fil u.

5. Procédé selon la revendication 4, dans lequel la fonction d'utilité inclut une ou plusieurs contraintes incluant une première contrainte selon laquelle chaque unité de planification disponible peut être attribuée à un maximum d'un UE, et/ou une deuxième contrainte selon laquelle chaque dispositif sans fil peut utiliser un schéma de modulation et de codage unique pour le sous-ensemble d'unités de planification disponibles.

6. Procédé selon l'une quelconque des revendications 1 à 5, dans lequel l'expression du problème ILP sous forme du problème QUBO comprend :

   la négation de coefficients de la fonction objective du problème ILP ;
   la conversion de la fonction objective du problème ILP en une expression contenant uniquement des variables binaires ;
   la transformation d'une ou plusieurs contraintes de la fonction objective dans une forme sans contrainte en utilisant des fonctions de pénalités quadratiques, incluant la conversion de contraintes quelconques sous la forme d'inégalités linéaires dans une forme d'équation matricielle générale Ax = b, où A est une matrice contenant des coefficients de variables binaires dans le vecteur de colonne x, et b est un vecteur de colonne contenant les constantes dans le système d'équations linéaires, dans lequel la première contrainte comprend $\Sigma_u b_{u,k} \leq 1$, $\forall k \in \mathcal{N}$ et/ou la deuxième contrainte comprend $m_u \leq b_{u,k} m_{u,k} + (1 - b_{u,k}) m_M$, $\forall u$, $\forall k$ ;
   la combinaison de l'expression contenant uniquement des variables binaires et des fonctions de pénalités dans une expression quadratique unique équivalente à la forme $x^T Q x$ ;
   la détermination de la matrice Q à partir de l'expression quadratique ;
   dans lequel les variables binaires dans l'expression contenant uniquement des variables binaires représentent des qubits logique dans un graphe de problème pour le dispositif de calcul quantique.

7. Procédé selon la revendication 6, dans lequel la conversion de la fonction objective du problème ILP en l'expression contenant uniquement des variables binaires comprend l'expression de chaque $m_u$ sous forme de l'une des variables binaires.

8. Procédé selon la revendication 6 ou 7, comprenant la transformation de la contrainte $\Sigma_u b_{u,k} \leq 1$, $\forall k \in$ en une fonction de pénalité quadratique $\sum_{i=1, U \geq j > i}^{U-1} P\left(x_{N(i-1)+1} x_{N(j-1)+1}\right)$.

9. Procédé selon l'une quelconque des revendications 6 à 8, dans lequel la transformation de la contrainte d'inégalité $m_u \leq b_{u,k} m_{u,k} + (1 - b_{u,k}) m_M$, $\forall u$, $\forall k$ en une fonction de pénalité quadratique comprend :

   l'ajout d'une variable d'écart $s_i$, $i \in [1, UN]$ au côté gauche de la contrainte d'inégalité et l'expression d'une variable d'écart en termes de variables binaires pour convertir la contrainte d'inégalité dans une forme d'équation matricielle ; et
   la conversion de la forme d'équation matricielle en une fonction de pénalité quadratique en utilisant le terme $(Ax - b)^2$.

10. Procédé selon l'une quelconque des revendications 1 à 9, comprenant l'attribution des ressources dans le réseau sans fil en fonction d'un résultat de l'exécution du problème QUBO sur le dispositif de calcul quantique.

11. Procédé selon l'une quelconque des revendications 1 à 10, dans lequel l'exécution du problème QUBO sur le dispositif de calcul quantique comprend la réalisation d'un processus de recuit quantique.

12. Procédé selon l'une quelconque des revendications 1 à 11, dans lequel les ressources dans le réseau sans fil comprennent des ressources de communication sans fil entre la pluralité de dispositifs de communication sans fil et une ou plusieurs stations de base.

13. Programme informatique comprenant des instructions qui, lorsqu'elles sont exécutées sur au moins un processeur, amènent l'au moins un processeur à réaliser un procédé selon l'une quelconque des revendications 1 à 12.

14. Appareil (600) de détermination d'attribution de ressources dans un réseau sans fil, l'appareil comprenant un processeur (602) et une mémoire (604), la mémoire contenant des instructions exécutables par le processeur de sorte que l'appareil soit exploitable pour :

définir un problème de programmation linéaire en nombres entiers, ILP, pour une attribution de ressources sans fil à une pluralité de dispositifs de communication sans fil dans le réseau sans fil, dans lequel le problème ILP comprend un problème de maximisation pour la détermination d'un sous-ensemble respectif d'unités de planification disponibles pour chacun des dispositifs de communication sans fil de manière à maximiser une somme de valeurs d'une fonction d'utilité pour la pluralité de dispositifs sans fil, dans lequel la valeur de la fonction d'utilité pour un dispositif sans fil indique un débit pour ce dispositif sans fil pour le sous-ensemble respectif d'unités de planification disponibles, dans lequel la fonction d'utilité comprend une fonction objective pour le problème ILP ;

exprimer une détermination d'attribution de ressources pour une pluralité de dispositifs de communication sans fil dans le réseau sans fil sous forme d'un problème d'optimisation binaire sans contrainte quadratique, QUBO, comprenant l'expression du problème ILP sous forme du problème QUBO ; et

exécuter le problème QUBO sur un dispositif de calcul quantique pour déterminer l'attribution de ressources à la pluralité de dispositifs de communication sans fil dans le réseau sans fil.

15. Appareil selon la revendication 14, dans lequel la mémoire contient des instructions exécutables par le processeur de sorte que l'appareil soit exploitable pour réaliser le procédé selon l'une quelconque des revendications 2 à 12.

| Expressing determination of allocation of resources for a plurality of wireless communication devices in the wireless network as a quadratic unconstrained binary optimization (QUBO) problem | 102 |

| Executing the QUBO problem on a quantum computing device to determine the allocation of resources to the plurality of wireless communication devices in the wireless network | 104 |

100

## Figure 1A

| Defining an integer linear programming (ILP) problem for allocation of wireless resources to a plurality of wireless communication devices in a wireless network, wherein the ILP problem comprises a maximization problem of determining a respective subset of available scheduling units for each of the wireless communication devices so as to maximise a sum of values of a utility function for the plurality of wireless devices, wherein the value of the utility function for a wireless device indicates a throughput for that wireless device for the respective subset of available scheduling units, the utility function comprises an objective function for the ILP problem, and the value of the utility function for a wireless device for a subset of the available scheduling units is based on a maximum modulation and coding scheme throughput for the wireless device for the subset of available scheduling units | 122 |

| Expressing determination of allocation of resources for a plurality of wireless communication devices in the wireless network as a quadratic unconstrained binary optimization (QUBO) problem by expressing the ILP problem as the QUBO problem | 124 |

| Executing the QUBO problem on a quantum computing device to determine the allocation of resources to the plurality of wireless communication devices in the wireless network | 126 |

120

## Figure 1B

Number of Scheduling Units = 6

**Figure 2**

Number of Scheduling Units = 6

Figure 3

Number of Scheduling Units = 6

Figure 4

EP 4 265 034 B1

Number of Scheduling Units = 6

Figure 5A

Number of Scheduling Units = 6

Figure 5B

25

EP 4 265 034 B1

Interface — 606

— 600

Processing circuitry — 602

Memory — 604

**Figure 6**

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Digitally Annealed Solution for the Maximum Clique Problem with Critical Application in Cellular V2X. **NAGHSH ZAHRA et al.** ICC 2019 - 2019 IEEE INTERNATIONAL CONFERENCE ON COMMUNICATIONS (ICC). IEEE, 20 May 2019

- **TONY T. TRAN et al.** A Hybrid Quantum-Classical Approach to Solving Scheduling Problems. *Proceedings of the Ninth International Symposium on Combinatorial Search,* 20 June 2016